# EUROPÄISCHE PATENTANMELDUNG

(11) **EP 4 163 161 A1**
(43) Veröffentlichungstag der Anmeldung: **12.04.2023**
(21) Anmeldenummer: 22191773.5
(22) Anmeldetag: 23.08.2022
(51) Int. Cl.: B60S 1/48, B60S 1/34, B60S 1/52, F16K 11/10

(54) **WEGEVENTIL**

(30) Priorität: 06.10.2021 DE 102021125959
(71) Anmelder: VolaPlast GmbH@Co. KG, 34286 Spangenberg (DE)
(72) Erfinder: Bickel, Markus, 34326 Morschen (DE); Kraus, Peter, 34233 Fuldatal (DE); Schelhas, Martin, 34130 Kassel (DE); Waldmann, Thomas, 34119 Kassel (DE)
(74) Vertreter: Nestler, Jan Hendrik

(57) **Zusammenfassung**

Die Erfindung betrifft ein Wegeventil 10 aufweisend wenigstens einen Einlasskanal 15, einen ersten Auslasskanal 21 einen zweiten Auslasskanal 22 und ein Steuerelement 30 zum Steuern eines Fluidstromes zwischen dem Einlasskanal 15, dem ersten Auslasskanal 21 und/oder dem zweiten Auslasskanal 22. Das Steuerelement 30 umfasst dabei einen fluiddurchströmbar mit dem Einlasskanal und mit dem ersten Auslasskanal 21 verbundenen ersten Verbindungskanal 31, einen ersten Ventilkopf 310 mit einem ersten Vorspannmittel 312, welcher innerhalb des ersten Verbindungskanals 31 zwischen einer Öffnungsposition stromaufwärts und einer ersten Verschlussposition stromabwärts derart verschiebbar angeordnet ist, dass wenn der am ersten Zylinderkopf 310 wirkende Druck eines durch den ersten Verbindungskanal 31 fließenden Fluids größer als der Schaltdruck p₁ ist und somit die Haltekraft des Vorspannmittels 312 übersteigt, der erste Ventilkopf 310 von der Öffnungsposition zu seiner ersten Verschlussposition stromabwärts verschoben wird, einen fluiddurchströmbar mit dem Einlasskanal und mit dem zweiten Auslasskanal 22 verbundenen zweiten Verbindungskanal 32 und einen zweiten Ventilkopf 320 mit einem zweiten Vorspannmittel 322, welcher innerhalb des zweiten Verbindungskanals 32 zwischen einer Verschlussposition stromaufwärts und einer Öffnungsposition stromabwärts derart verschiebbar angeordnet ist, dass wenn der am zweiten Zylinderkopf 320 wirkende Druck eines durch den zweiten Verbindungskanal 32 fließenden Fluids größer als der Schaltdruck p₂ ist und somit die Haltekraft des Vorspannmittels 322 übersteigt, der zweite Ventilkopf 320 von der Verschlussposition zu seiner Öffnungsposition stromabwärts verschoben wird.

Hierbei ist der erste Verbindungskanal 31 so ausgebildet, dass er durch eine Bewegung des ersten Ventilkopfs 310 von einer Öffnungsposition zu einer Verschlussposition geschlossen wird, wobei der zweite Verbindungskanal 32 ist so ausgebildet, dass er durch eine Bewegung des zweiten Ventilkopfs 32 von einer Verschlussposition zu einer Öffnungsposition geöffnet wird.

## Beschreibung

Die Erfindung betrifft ein Wegeventil zur druckgesteuerten Verteilung eines Fluids von wenigstens einem Einlasskanal in wenigstens zwei Auslasskanäle insbesondere zum Betrieb einer Wischvorrichtung.

### Stand der Technik

Wischvorrichtungen zur Reinigung der Oberflächen von transparenten Fahrzeugkomponenten (Windschutzscheiben, Heckscheiben, Beleuchtungseinrichtungen) oder reflektierenden Fahrzeugkomponenten (Außenspiegel) sind bekannt. In der Regel weisen sie einen Wischerarm und ein Wischerblatt auf, die durch einen Wischerblattadapter miteinander gekoppelt sind.

Bekannt sind ferner Wischvorrichtungen, bei denen das Wischerblatt mit zwei Düsenanordnungen ausgestattet ist, deren Düsen entlang den beiden Längsseiten des Wischerblatts verteilt sind. Diese Düsenanordnungen sind im Rhythmus der Hin-und-Her-Bewegung des Wischerblatts wechselweise aktivierbar und deaktivierbar. Sie erlauben es somit, eine Reinigungsflüssigkeit abhängig von der momentanen Bewegungsrichtung des Wischerblatts unmittelbar vor dem Wischerblatt aufzutragen, indem beim Wechsel der Bewegungsrichtung des Wischerblatts auch ein Wechsel der aktiven Düsenanordnung erfolgt.

Der sichere Betrieb solcher Wischvorrichtungen erfordert eine Steuerung, bei der die Umschaltung der Zufuhr der Reinigungsflüssigkeit zwischen den beiden Düsenanordnungen synchron zur Bewegung des Wischerblatts erfolgt.

Aus der DE 10 2013 209 196 A1 ist eine Wischvorrichtung bekannt, bei der ein im Wischerblattadapter untergebrachtes steuerbares Wegeventil, das mit der Elektronik des Kraftfahrzeugs verbunden ist, geschaltet wird. Aus der DE 10 2014 226 740 A1 ist eine Wischvorrichtung bekannt, deren Wischwasserauslässe durch zwei mechanische Betätigungselemente und zwei mechanische Steuerelemente gesteuert werden.

### Aufgabe der Erfindung

Aufgabe der Erfindung ist es, ein Wegeventil bereitzustellen, welches gegenüber Wegeventilen, wie sie im Stand der Technik bekannt sind, verbessert ist. Weitere Aufgaben der Erfindung betreffen eine verbesserte Wischvorrichtung, ein verbessertes Wischsystem, sowie ein verbessertes Verfahren zum Betrieb eines Wegeventils.

### Lösung der Aufgabe

Die Lösung dieser Aufgabe ergibt sich aus den Merkmalen des Hauptanspruchs. Weiterhin sind vorteilhafte Ausgestaltungen und Weiterbildungen der Erfindung den Unteransprüchen entnehmbar.

### Beschreibung

Diese Aufgabe wird gelöst durch ein Wegeventil, wenigstens aufweisend wenigstens einen Einlasskanal, einen ersten Auslasskanal, einen zweiten Auslasskanal, ein Steuerelement zum Steuern eines Fluidstromes zwischen dem zumindest einen Einlasskanal, dem ersten Auslasskanal und/oder dem zweiten Auslasskanal.

Das Steuerelement umfasst dabei wenigstens einen fluiddurchströmbar mit dem zumindest einen Einlasskanal und mit dem ersten Auslasskanal verbundenen ersten Verbindungskanal mit einem ersten Ventilkopf mit einem ersten Vorspannmittel, welcher innerhalb des ersten Verbindungskanals zwischen einer Öffnungsposition stromaufwärts und einer ersten Verschlussposition stromabwärts derart verschiebbar angeordnet ist, dass wenn der Druck eines durch den ersten Verbindungskanal fließenden Fluids größer als ein erster Schaltdruck p₁ ist und somit die Haltekraft des ersten Vorspannmittels übersteigt, der erste Ventilkopf von seiner Öffnungsposition zu der ersten Verschlussposition stromabwärts verschoben wird.

Das Steuerelement umfasst weiterhin einen fluiddurchströmbar mit dem Einlasskanal und mit dem zweiten Auslasskanal verbundenen zweiten Verbindungskanal mit einem zweiten Ventilkopf mit einem zweiten Vorspannmittel, welcher innerhalb des zweiten Verbindungskanals zwischen einer Verschlussposition stromaufwärts und einer Öffnungsposition stromabwärts verschiebbar angeordnet ist, sodass, wenn der Druck eines durch den zweiten Verbindungskanal fließenden Fluids größer als ein zweiter Schaltdruck p₂ ist und somit die Haltekraft des zweiten Vorspannmittels übersteigt, der zweite Ventilkopf von seiner Verschlussposition zu seiner Öffnungsposition stromabwärts verschoben wird.

Hierbei ist der erste Verbindungskanal so ausgebildet, dass er bei einer Bewegung des ersten Ventilkopfs von seiner Öffnungsposition zu seiner Verschlussposition geschlossen wird, wobei der zweite Verbindungskanal so ausgebildet ist, dass er bei einer Bewegung des zweiten Ventilkopfs von seiner Verschlussposition zu seiner Öffnungsposition geöffnet wird.

Die Begriffe "Öffnen" und "Schließen" betreffen dabei insbesondere die Möglichkeit eines Fluiddurchgangs durch den betreffenden Verbindungskanal am betreffenden Ventilkopf vorbei, bzw. eine Verhinderung eines derartigen Fluiddurchgangs.

Das Wegeventil weist dabei vorzugsweise genau zwei Auslasskanäle auf. Dies führt zu einer besonders einfachen und kostengünstig herstellbaren Konstruktion des Ventils.

In einer Weiterbildung des Wegeventils, weist dieses wenigstens zwei Einlasskanäle auf, wobei diese an ihrer Verbindung zu den Verbindungskanälen fluiddurchströmbar verbunden sind. Dadurch ist es möglich, mit dem vorgeschlagenen Wegeventil Fluid aus verschiedenen Fluidquellen in die Auslasskanäle zu verteilen. In einer besonderen Ausführungsform weist das Wegeventil genau zwei Einlasskanäle auf.

Dieses Wegeventil dient effektiv dazu, den eingehenden Strom eines Fluids (z.B. einer Waschflüssigkeit) passiv, d. h. ohne elektrisch oder magnetisch angesteuerte Aktoren, zwischen zwei Ausgängen, die zu jeweils einem Auslasskanal führen, umzuschalten.

Die Mehrzahl oder im Wesentlichen alle Komponenten des Wegeventils können aus Kunststoff gefertigt sein. Einzelne Komponenten können auch aus Metall und/oder aus einem elastisch verformbaren Material, wie einem gummiartigen Material, ausgeführt sein. Z. B. kann ein unten beschriebenes Vorspannmittel als Stab aus einem Gummimaterial oder als Spiralfeder aus Kunststoff, aber auch als Spiralfeder aus Metall ausgeführt sein. Eine Fertigung einer Mehrzahl oder aller Komponenten des Wegeventils aus Metall oder anderen Materialien ist ebenfalls möglich.

Als Druck p wird der Druck bezeichnet, den ein durch das Wegeventil strömendes Fluid ausübt. Der Druck p kann dabei insbesondere die Summe des statischen und des dynamischen Drucks des Fluids sein. Dabei wird der Druck als positiv (p>0) definiert, wenn das Fluid vom Einlasskanal weg strömt oder strömen will (in Richtung Verbindungskanal und schlussendlich Auslasskanal) und als negativ (p<0), wenn das Fluid zum Einlasskanal hin strömt oder strömen will (vom Auslasskanal über den Verbindungskanal hindurch). Wenn keine Strömung vorliegt oder wenn das Fluid zum Einlasskanal strömt, wird der resultierende Druck im Folgenden als nichtpositiv (p ≤ 0) bezeichnet. Je nach konkreter Situation kann unter dem Druck p gegebenenfalls auch der statische bzw. dynamische Druck in Alleinstellung verstanden werden, wobei im Folgenden aus Gründen der Einfachheit meist von einer Kombination aus statischem und dynamischem Druck die Rede ist, ohne dass dies die anderen Möglichkeiten ausschließen soll. Rein beispielhaft: befindet sich ein Ventilkopf in einer Verschlussstellung, so ist in aller Regel lediglich ein statischer Druck relevant, da mangels Fluidströmung kein dynamischer Druck auftritt. Befindet sich ein Ventilkopf demgegenüber in einer Öffnungsstellung, so ist in aller Regel eine Kombination aus statischem und dynamischem Druck relevant.

Stromabwärts bezeichnet hier die Flussrichtung des Fluids vom zumindest einen Einlasskanal über einen Verbindungskanal zu einen Auslasskanal. Sowohl der Einlasskanal, als auch die Verbindungskanäle und die Auslasskanäle sind dabei fluiddurchströmbar ausgebildet.

Aufgabe der Schalteinheit ist es, den Fluidstrom durch die verschiedenen Auslasskanäle im Wegeventil durch Einstellung des Drucks im zumindest einen Einlasskanal zuzulassen oder zu verhindern. Durch die geometrische Auslegung der Kanäle und der Rückstellelemente lassen sich für die unterschiedlichen Kanäle verschiedene Schaltdrücke einstellen.

Die Vorspannmittel sind vorzugsweise mechanische Rückstellelemente, z. B. Spiralfedern. Sie sind vorzugsweise aus Metall gefertigt, z. B. aus Stahl, vorzugsweise rostfreiem Stahl oder aus Kupfer. Sie können aber auch aus Kunststoff gefertigt sein. Geeignet als elastisches Rückstellelement wäre aber auch ein Gummistab, der bei Einwirkung einer Kraft entlang der Stabachse kontrahiert, also gestaucht, werden kann (oder umgekehrt verlängert, also gezogen werden kann). Andere Rückstellelemente sind ebenfalls einsetzbar. In einer zusätzlichen oder alternativen Ausführungsform ist wenigstens ein Vorspannmittel als magnetisches Rückstellelement ausgebildet.

Dabei sind der erste Ventilkopf und das erste Vorspannmittel so ausgebildet, dass der Ventilkopf in seiner Öffnungsposition verbleibt, wenn der Druck p des anströmenden Fluids die Haltekraft des ersten Vorspannmittels nicht übersteigt. Wenn der durch das anströmende Fluid resultierende dynamische Druck zusammen mit dem statischen Druck des Fluids die Haltekraft des ersten Vorspannmittels übersteigt, wird der erste Ventilkopf von einer Öffnungsposition zu einer ersten Verschlussposition stromabwärts im ersten Verbindungskanal verschoben.

Der Druck bei welchem die Bewegung einsetzt, wird auch als Schaltdruck, vorliegend als erster Schaltdruck p₁ bezeichnet. Der erste Ventilkopf verbleibt auf der Verschlussposition, solange der Druck größer als der erste Schaltdruck p₁ (bzw. der erste Rückfall-Schaltdruck p₁') ist. Dabei tritt üblicherweise eine Hysterese zwischen den beiden Schaltvorgängen auf. Dies ist insbesondere darauf zurückzuführen, dass die Bewegung des ersten Ventilkopfs in seine Verschlussstellung durch eine Kombination aus dynamischem und statischem Druck verursacht wird. In seiner Verschlussstellung ist der erste Ventilkopf demgegenüber lediglich statischem Fluiddruck ausgesetzt (sowie der mechanischen Kraft durch das Vorspannmittel). Der Hysterese-Unterschied kann dabei durchaus beachtlich sein. Beispielsweise kann der Schaltdruck p₁=1,5 bar betragen, während der Rückfall-Schaltdruck p₁'=0,5 bar beträgt. Entsprechendes gilt in Analogie auch für anderweitige fluidinduzierte Schaltvorgänge. Der erste Verbindungskanal ist dabei so ausgebildet, dass er geschlossen ist, wenn sich der erste Ventilkopf in der Verschlussposition befindet d.h. wenn kein Fluid durchströmen kann.

Weiterhin sind auch der zweite Ventilkopf und das zweite Vorspannmittel so ausgebildet, dass der zweite Ventilkopf in seiner Verschlussposition verbleibt, wenn der Druck des anströmenden Fluids die Haltekraft des zweiten Vorspannmittels nicht übersteigt. Wenn die durch den dynamischen und den statischen Druck des anströmenden Fluids wirkende Strömungskraft die Haltekraft des zweiten Vorspannmittel übersteigt (in der Regel zuvörderst der statische Druck des anströmenden Fluids, solange sich der zweite Ventilkopf noch Vollständig in seiner Verschlussposition befindet), wird der zweite Ventilkopf von seiner Verschlussposition zu einer Öffnungsposition stromabwärts im zweiten Verbindungskanal verschoben. Damit wirkt der zweite Ventilkopf auch als Rückschlagventil.

Als Öffnungsposition kann dabei jede Position des (ersten, zweiten und gegebenenfalls weiteren) Ventilkopfes innerhalb des betreffenden Verbindungskanals, in welchem sich ein Ventilkopf befinden kann, verstanden werden, in der ein Fluid den Verbindungskanal von dem wenigstens einen Einlasskanal am Ventilkopf vorbei zu einem Auslasskanal passieren kann. Als Öffnungsposition ist damit vorzugsweise ein gewisser Öffnungsbereich des Verbindungskanals möglich.

Der Druck bei welchem die Bewegung des zweiten Ventilkopfs einsetzt, wird vorliegend auch als zweiter Schaltdruck p₂ bezeichnet. Der zweite Ventilkopf verbleibt in der Öffnungsposition, solange der Druck p größer als der zweite Schaltdruck p₂ (bzw. der aufgrund von unterschiedlichen Fluideffekten/Hystereseeffekten der zweite Rückfall-Schaltdruck p₂') ist. Der zweite Verbindungskanal ist dabei so ausgebildet, dass er geschlossen ist, wenn sich der zweite Ventilkopf in der Verschlussposition befindet, d. h., dass kein Fluid durch den Verbindungskanal hindurchströmen kann.

Weiterhin ist es möglich, eines oder beide Enden des ersten und/oder des zweiten Verbindungskanals als Dichtschräge bzw. als Dichtkante auszuführen. Diese weisen dabei vorzugsweise einen Winkel von 90° auf. Sie dienen als Ventilsitz für den betreffenden Ventilkopf.

Bei der Ausführung des vorgeschlagenen Wegeventils sind erste und zweite Schaltdrücke p₁ und p₂ im Bereich von üblicherweise 0,1 bar bis 20 bar möglich. Bevorzugt sind Druckbereiche zwischen 0,5 bar und 10 bar. Typischerweise liegen die verwendeten Schaltdrücke p₁ und p₂ im Bereich von 1 bar und 4 bar. Dieser Druckbereich kann je nach konkretem Anwendungsfall nach oben oder unten erweitert werden. Ähnliche Druckbereiche ergeben sich auch für die Rückfall-Schaltdrücke p₁' und p₂'.

Das Verhältnis der Schaltdrücke p₁ und p₂ (erster Schaltdruck und zweiter Schaltdruck) kann derart ausgestaltet sein, dass der erste Schaltdruck p₁ größer als der zweite Schaltdruck p₂ ist, dass der erste Schaltdruck p₁ gleich dem zweiten Schaltdruck p₂ ist, oder dass der erste Schaltdruck p₁ kleiner als der zweite Schaltdruck P₂ ist.

Damit ergeben sich bei geeigneter Wahl der beiden Schaltdrücke p₁ und p₂ drei Schaltzustände:
1. Wenn der Druck p kleiner ist als der erste Schaltdruck p₁, ist der erste Verbindungskanal offen und der zweite Verbindungskanal geschlossen.
2. Wenn der Druck p größer als der zweite Schaltdruck p₂ aber kleiner als der erste Schaltdruck p₁ ist, sind sowohl der erste und der zweite Verbindungskanal offen.
3. Wenn der Druck p größer als der zweite Schaltdruck p₂ ist, ist der erste Verbindungskanal geschlossen und der zweite Verbindungskanal offen.

Wenn der zweite Schaltdruck p₂ kleiner als der erste Schaltdruck p₁ ist, kann der zweite Schaltzustand eintreten.

Sollte der zweite Schaltdruck p₂ größer als der erste Schaltdruck p₁ sein, sind bei einem Druck p der größer ist als der erste Schaltdruck p₁, aber kleiner ist als der zweite Schaltdruck p₂, beide Verbindungskanäle geschlossen. Durch das nachströmende Fluid wird der Druck p in diesem Fall schnell ansteigen bis er den zweiten Schaltdruck p₂ erreicht und der zweite Verbindungskanal geöffnet wird. Das heißt, der dritte Schaltzustand wird entsprechend schnell erreicht. Hierbei handelt es sich in der Regel um eine besonders bevorzugte Ausführungsform.

Weiterhin ist es möglich, dass das Wegeventil ein oder mehrere separate Rückschlagventile und/oder ein integriertes Rückschlagventil umfasst, sodass kein Fluid von einem oder mehreren Auslasskanälen in den Einlasskanal bzw. in die Einlasskanäle strömt.

Für die Positionierung von separaten Rückschlagventilen gibt es mehrere Möglichkeiten. In einer ersten Ausführungsform ist je ein separates Rückschlagventil vorzugsweise zwischen der Steuereinheit und dem ersten Verbindungskanal oder zwischen der Steuereinheit und dem wenigstens einen Einlasskanal angeordnet. In einer zweiten Ausführungsform ist je ein Rückschlagventil zwischen der Steuereinheit und dem korrespondierenden Auslasskanal angeordnet, also insbesondere je ein Rückschlagventil zwischen den zumindest zwei Steuereinheiten und den zumindest zwei korrespondierenden Auslasskanälen.

Um die Verwendung von separaten Rückschlagventilen zu vermeiden und so ein besonders einfaches und kompaktes Wegeventil bereitzustellen, bietet es sich an, zumindest ein Rückschlagventil zumindest ein Steuerelement des Wegeventils zu integrieren. Dies kann alternativ oder ergänzend zu dem/den separaten Rückschlagventilen erfolgen, und insbesondere für alle oder auch nur für einen Teil der Rückschlagventile realisiert werden.

Dazu kann der erste Ventilkopf so ausgebildet werden, dass er innerhalb des ersten Verbindungskanals zwischen einer zweiten Verschlussposition und seiner Öffnungsposition stromaufwärts derart verschiebbar angeordnet ist, dass dann, wenn der Druck eines durch den ersten Verbindungskanal fließenden Fluids positiv ist, er von der zweiten Verschlussposition zu seiner Öffnungsposition stromabwärts verschoben wird. Der erste Verbindungskanal ist so ausgebildet, dass er bei einer Bewegung des ersten Ventilkopfs von der zweiten Verschlussposition zu seiner Öffnungsposition geöffnet wird, sodass das Wegeventil als Rückschlagventil wirken kann.

Der erste Ventilkopf befindet sich, solange der Druck nichtpositiv (p≤0) ist, in seiner zweiten Verschlussposition. Diese Position befindet sich vorzugsweise an dem, dem zumindest einen Eingangskanal zugewandten Ende des ersten Verbindungskanals. Wenn die durch den dynamischen und den statischen Druck des anströmenden Fluids wirkende Strömungskraft positiv ist, wird der erste Ventilkopf von seiner Verschlussposition zu seiner Öffnungsposition stromabwärts im ersten Verbindungskanal verschoben. Da sich der erste Ventilkopf bei einem nichtpositiven Druck grundsätzlich ebenfalls in einer Verschlussposition (der zweiten Verschlussposition) befindet, kann das Wegeventil somit zusätzlich als Rückschlagventil dienen.

Um ein dichtes Verschließen des ersten Verbindungskanals in dieser Ausführungsform zu gewährleisten, ist das dem Eingangskanal zugewandte Ende vorzugsweise als Dichtschräge bzw. als Dichtkante ausgeführt. Diese weist dabei vorzugsweise einen Winkel von 90° auf. Der entsprechende Bereich dient dabei als Ventilsitz für den ersten Ventilkopf.

Denkbar ist es weiterhin, dass das Wegeventil zumindest ein Befestigungsmittel zur Befestigung, insbesondere zur reversiblen Befestigung eines separat ausgebildeten Anschlusselements aufweist. Das Befestigungsmittel bzw. das Anschlusselement kann ausgewählt sein aus der Gruppe: Schrauben, Schraubengewindemittel, Clipsverbindungsmittel, Hintergreifstegmittel, Rastnasenmittel, Hintergreifmittel, Bajonettverbindungsmittel und Bajonettflanschmittel.

Um ein dichtes Verschließen des zweiten Verbindungskanals zu gewährleisten, ist dieser an seinem dem Eingangskanal zugewandten Ende vorzugsweise als Dichtschräge bzw. Dichtkante ausgeführt, und bildet auf diese Weise insbesondere einen Ventilsitz für den zweiten Ventilkopf. Diese weist dabei vorzugsweise einen Winkel von 90° auf.

Das Wegeventil kann zumindest teilweise in einem Gehäuse angeordnet sein, welches so ausgebildet ist, dass es den zumindest einen Einlasskanal, die Verbindungskanäle und zumindest abschnittsweise die Auslasskanäle umgibt und definiert. Dabei kann das Gehäuse beispielsweise einen oder mehrere Kunststoffe umfassen. Insbesondere kann das Gehäuse durch ein Spritzgussverfahren gefertigt werden. Die Kanalanordnung kann erforderlichenfalls mit mechanischen Bearbeitungsverfahren, z. B. Bohren, Fräsen, in ein vorzugsweise massiv ausgeführte Gehäuses eingebracht werden. Dies ist insbesondere auch durch Nachbearbeitung eines im Spritzgussverfahren hergestellten Gehäuses möglich. Das Gehäuse kann Vorrichtungen zum Anschluss eines Anschlusselements an das Gehäuse umfassen. Insbesondere kann das Gehäuse einteilig (insbesondere auch durch Verschweißen, insbesondere durch Reibschweißen oder Ultraschallschweißen von Gehäuserohteilen aneinander) oder einstückig ausgebildet sein. Selbstverständlich kann das Gehäuse auch als Teil des Wegeventils angesehen werden.

Der Einlasskanal kann an seinem der Einlassöffnung gegenüberliegenden Ende verschließbar ausgeführt oder dort verschlossen ausgeführt sein. Beide Auslasskanäle können an ihrem der jeweiligen Auslassöffnung gegenüberliegenden Ende verschlossen ausgeführt sein, oder mittels einer Verschlusseinrichtung (Pfropfen) verschlossen werden. Die zusätzliche Verschlussmöglichkeit kann die universelle Verwendbarkeit des Wegeventils erhöhen. Beispielsweise kann das Wegeventil auch dann eingesetzt werden, wenn keine zwei Ausgangskanäle vonnöten sind, einfach, indem einer der beiden Ausgangskanäle verschlossen wird, bzw. verschlossen bleibt.

Der Einlasskanal und die Auslasskanäle können in Durchflussrichtung versetzt zueinander angeordnet sein, insbesondere in Axialrichtung gesehen im Wesentlichen hintereinander angeordnet sein. Dies erlaubt einen besonders kompakten Aufbau des Wegeventils.

Die Komponenten des Wegeventils sind vorzugsweise wie folgt ausgeführt:
Die Auslasskanäle und die Verbindungskanäle sind vorzugsweise als zylindrische Kanäle ausgeführt. Andere Querschnittsformen sind möglich. Der zumindest eine Einlasskanal ist vorzugsweise ebenfalls als zylindrischer Kanal ausgeführt, weist also einen kreisförmigen, rotationssymmetrischen Querschnitt auf. Zumindest einer der Verbindungskanäle (und nicht nur diese) kann aber auch insbesondere in seinem vorderen, d. h. dem von der Einlassöffnung ausgehenden, Abschnitt als Kanal mit einem nicht rotationssymmetrischen Querschnitt ausgeführt sein. Geeignet sind z. B. ein rechteckiger Querschnitt, ein quadratischer Querschnitt oder ein rechteckiger/quadratischer Querschnitt mit abgerundeten Ecken, um so eine besonders hohe Drehfestigkeit der Ventilköpfe zu erreichen. Dies gilt insbesondere dann, wenn die betreffenden Ventilköpfe eine zur jeweiligen Querschnittsform korrespondierende Formgebung aufweisen.

Die Achsen des zumindest einen Einlasskanals und der Auslasskanäle liegen vorzugsweise in einer Ebene. Die Achsen des zumindest einen Einlasskanals und der Auslasskanäle verlaufen vorzugsweise parallel zueinander, d. h. diese Kanäle sind vorzugsweise parallel zueinander versetzt. Die Auslasskanäle können aber auch gewinkelt zum Einlasskanal verlaufen, sodass sie eine Y-förmige Anordnung bilden. Beide Auslasskanalquerschnitte sind vorzugsweise identisch geformt, sie können also den gleichen Innendurchmesser, aber gegebenenfalls unterschiedliche Längen aufweisen. Bevorzugt liegen die Einlassöffnung und die beiden Auslassöffnungen an gegenüberliegenden Seiten des Wegeventils, sodass ein das Wegeventil durchströmendes Fluid seine Richtung beibehält. So ist der Strömungswiderstand besonders gering.

Die Verbindungskanäle verlaufen vorzugsweise parallel zum zumindest einen Einlasskanal und zu den Auslasskanälen. Dabei können die Achsen der beiden Verbindungskanäle parallel zueinander verlaufen. Die Verbindungskanäle können aber auch schräg vom Einlasskanal zu den Auslasskanälen verlaufen, also gegenüber einer senkrechten Verbindung (90°) um einen Winkel α geneigt sein, wobei dieser Winkel zumindest 0°, 15°, 30° oder 45° und/oder bis zu 15°, 30°, 45°, 60°, 75° oder 90° betragen kann. Ausgehend vom Einlasskanal sind sie dabei vorzugsweise in Richtung der Auslassöffnungen geneigt. Die Verbindungskanäle weisen einen Innendurchmesser d auf, der vorzugsweise kleiner ist als der Innendurchmesser der Auslasskanäle. Beide Verbindungskanäle weisen vorzugsweise den gleichen Innendurchmesser auf.

Wenn die Verbindungskanäle parallel zwischen dem zumindest einen Einlasskanal (insbesondere entsprechender Abschnitt hiervon) und den Auslasskanälen verlaufen, dann bilden sie insbesondere im Falle kreisrunder Querschnitte zum zumindest einen Einlasskanal in der Regel eine kreisförmige Mündung mit dem Mündungsdurchmesser *d_{M}* = *d* aus. Wenn die Verbindungskanäle gegenüber diesem senkrechten Verlauf um einen Winkel α geneigt sind, dann bilden sie insbesondere im Falle kreisrunder Querschnitte zum zumindest einen Einlasskanal in der Regel eine elliptische Mündung mit dem längsten Mündungsdurchmesser *d*_{M} = *d*/cos α (Hauptachse der Ellipse) aus. Die Verbindungskanäle sind gegebenenfalls in Richtung der Achse des zumindest einen Einlasskanals um eine Längendifferenz *D* gegeneinander versetzt, die bevorzugt mindestens einem Mündungsdurchmesser *d*_{M} entspricht, sodass *D* ≥ *d_{M}* ist, besonders bevorzugt aber mindestens einem zweifachen Mündungsdurchmesser *d*_{M} entspricht, sodass *D* ≥ 2*d*_{M} ist.

Die Auslasskanäle können unterschiedliche Längen haben, wobei sich ihre Längen vorzugsweise um die Längendifferenz *D* unterscheiden, um welche die Verbindungskanäle versetzt sind. Es ist aber auch möglich, die Auslasskanäle gleich lang auszuführen.

Der Vollständigkeit halber sollte erwähnt werden, dass sich im Falle nicht-kreisrunder Querschnitte der Begriff eines "Durchmessers" auf einen Minimal-Durchmesser, einen Maximal-Durchmesser, einen mittleren Durchmesser oder einen besonders ausgezeichneten Durchmesser (zum Beispiel Hauptachse bei einer Ellipse) beziehen kann.

Wegeventile werden in einer Vielzahl von Einsatzgebieten verwendet. Eine mögliche Verwendung des Wegeventils des vorgeschlagenen Typs ist in Wischvorrichtungen.

Ein weiterer Aspekt dieser Verwendung ergibt sich, wenn bei einer Wischvorrichtung für ein Fahrzeug, aufweisend einen Wischerarm und zumindest eine erste und eine zweite Düse, vorzugsweise eine Mehrzahl von ersten und/oder zweiten Düsen, welche in Richtung zweier gegenüberliegender Längsseiten des Wischerarms gerichtet sind, ein Wegeventil vom vorab beschriebenen Typ vorgesehen ist, wobei der erste Auslasskanal des Wegeventils mit der ersten Düse und der zweite Auslasskanal des Wegeventils mit der zweiten Düse fluidisch verbunden ist. In aller Regel ist am Wischerarm ein Wischerblatt befestigt (unmittelbar oder mittelbar-wie beispielsweise mittels eines Adapters, eines Drehgelenks und dergleichen). Meist sind Wischerarm und Wischerblatt bezüglich ihrer Längsachsen im Wesentlichen parallel zueinander bzw. in einem kleinen Winkel zueinander angeordnet (beispielsweise bis zu 10°, 20°, 30° oder 40°). Insbesondere im Falle eines größeren Winkels (aber nicht hierauf beschränkt) können zumindest die erste und die zweite Düse (vorzugsweise eine Mehrzahl von ersten und/oder zweiten Düsen) auch in Richtung zweier gegenüberliegender Längsseiten des Wischerblatts gerichtet sein. Die erste und/oder zweite Düse (bzw. die ersten und/oder zweiten Düsen) kann am Wischerarm (gegebenenfalls auch längs des Wischerarms) und/oder am Wischerblatt (gegebenenfalls auch längs des Wischerblatts) und/oder an einem Verbindungsmittel von Wischerarm und Wischerblatt (gegebenenfalls auch längs eines derartigen Verbindungsmittels) befestigt sein.

Ein nochmals weiterer Aspekt der Erfindung betrifft ein Wischsystem für ein Fahrzeug, welches mindestens eine derartige Wischvorrichtung aufweist, sowie eine insbesondere als Monopumpe ausgebildete geregelte Pumpe zur Förderung einer Flüssigkeit mit zumindest einem ersten Druckbereich p₃ und einem zweiten Druckbereich p₄. Der erste Druckbereich p₃ kann dabei einen Druckbereich unterhalb des ersten Schaltdrucks p₁ umfassen, insbesondere unterhalb des ersten Rückfall-Schaltdrucks p₁', während der zweite Druckbereich p₄ einen Druckbereich oberhalb des zweiten Schaltdrucks p₂ umfassen kann. Bevorzugt liegt das obere Ende des ersten Druckbereichs p₃ in der Nähe des ersten Schaltdrucks p₁ (bzw. in der Nähe des ersten Rückfall-Schaltdrucks p₁'), wobei beispielsweise ein "Sicherheitsabstand" von bis zu 5 %, 10 %, 15 %, 20 %, 25 % oder 30 % des Wertes des ersten Schaltdrucks p₁ (Rückfall-Schaltdrucks p₁') eingehalten werden kann. Ebenfalls bevorzugt liegt das untere Ende des zweiten Druckbereichs p₄ in der Nähe des zweiten Schaltdrucks p₂, wobei in analoger Weise ein "Sicherheitsabstand", insbesondere ein "Sicherheitsabstand" mit den oben genannten Werten, eingehalten werden kann.

Insbesondere kann eine Zuleitung zum Transport der Flüssigkeit von der geregelten Pumpe zu dem Wegeventil der mindestens einen Wischvorrichtung vorgesehen sein. Bevorzugt kann zumindest abschnittsweise genau eine Zuleitung und/oder zumindest abschnittsweise genau eine Zuleitung pro Wischerarm vorgesehen sein.

Weiterhin kann zumindest ein vorzugsweise als Reversiermotor ausgebildeter Bewegungsmotor zur Bewegung des Wischerarms vorgesehen sein.

Bei dem Wischsystem kann eine Steuervorrichtung vorgesehen werden, insbesondere eine elektrische Steuervorrichtung zur Ansteuerung der geregelten Pumpe und/oder des Bewegungsmotors. Insbesondere ist es auch möglich, dass die geregelte Pumpe und/oder der Bewegungsmotor (speziell im Fall eines Reversiermotors) ihrerseits bzw. seinerseits eine Information an die Steuervorrichtung sendet. Zusätzlich oder alternativ ist es möglich, dass auch die geregelte Pumpe und der Bewegungsmotor untereinander Informationen austauschen. Beispielsweise ist es möglich, dass die Steuervorrichtung ein Ein-/Ausschaltsignal an den Bewegungsmotor sendet. Der Bewegungsmotor wiederum sendet eine Information bezüglich seiner Bewegungsrichtung an die Steuervorrichtung. Die Steuervorrichtung wiederum steuert die geregelte Pumpe (insbesondere derart, dass sich ein geeigneter Druck am Pumpenausgang und damit im zumindest einen Einlasskanal des Wegeventils ergibt). Die Information bezüglich der Bewegungsrichtung des Bewegungsmotors kann vom Bewegungsmotor jedoch auch unmittelbar an die geregelte Pumpe gesendet werden. Somit ist es möglich, dass ein Reinigungsmittelaustrag in Richtung der jeweiligen Bewegungsrichtung des Wischerarms bzw. Wischerblatts erfolgt. Gegebenenfalls kann der Bewegungsmotor und/oder die geregelte Pumpe auch eine Fehlerinformation an die Steuervorrichtung senden.

Eine geeignete Ansteuerung der geregelten Pumpe kann insbesondere durch eine Beaufschlagung mit unterschiedlichen elektrischen Spannungen bzw. durch unterschiedliche Drehzahlen der geregelten Pumpe realisiert werden. Insbesondere ist es aber auch möglich, dass eine Ansteuerung der geregelten Pumpe durch einfaches Umpolen der geregelten Pumpe bzw. durch Umkehrung der Drehrichtung der geregelten Pumpe erfolgt.

Es wird nun ein bevorzugter Aufbau einer Wischvorrichtung vorgeschlagen, die mit dem vorab beschriebenen Wegeventil ausgestattet ist:
Die Wischvorrichtung kann einen Wischerarm und ein Wischerblatt umfassen, die durch einen Wischerblattadapter miteinander verbunden sein können. Beim Wischerblattadapter handelt es sich um eine mögliche Art von Verbindungsmittel zwischen Wischerarm und Wischerblatt.

Das Wischerblatt ist üblicherweise mit einem Wischgummi ausgestattet, welches sich in der Regel mittig über die Länge des Wischerblatts erstreckt und in Kontakt mit einer zu reinigenden Oberfläche, z. B. der Windschutzscheibe eines Fahrzeugs, gebracht werden kann. Das Wischerblatt ist beispielsweise mit einer ersten Düse und einer zweiten Düse, umfassend mindestens eine, vorzugsweise aber mehrere Düsen, ausgestattet, wobei Düsen auf beiden Längsseiten des Wischerblatts angeordnet sind. Vorzugsweise sind mehrere Düsen auf beiden Längsseiten des Wischerblatts äquidistant angeordnet. Die Düsen der beiden Düsenanordnungen sind somit vorzugsweise beidseitig des Wischgummis positioniert, wobei die Düsen einer ersten Düsenanordnung auf der einen Längsseite des Wischerblatts, die Düsen einer zweiten Düsenanordnung auf der gegenüberliegenden zweiten Längsseite des Wischerblatts positioniert sind. Die Düsen sind idealerweise so gerichtet, dass sie eine Reinigungsflüssigkeit auf die zu reinigende Oberfläche sprühen können. Ein vorab beschriebenes Wegeventil kann in den Wischerarm oder in den Wischerblattadapter eingebaut sein. Um eine verbesserte Anpassung an die Geometrie des Wischerarms bzw. des Wischerblattadapters zu erreichen, kann das Wegeventil an der Stirnseite seines Gehäuses mit einem Anschlusselement verbunden sein, welches zusammen mit dem Wegeventil in den Wischerarm oder in den Wischerblattadapter eingebaut sein kann. Jeweils eine Auslassöffnung des Wegeventils ist üblicherweise fluiddicht mit einer Düsenanordnung des Wischerblatts verbunden, sodass in der ersten Schaltstellung des Wegeventils die erste Düsenanordnung und in der zweiten Schaltstellung des Wegeventils die zweite Düsenanordnung mit Reinigungsflüssigkeit beaufschlagbar ist.

Ein Wischsystem für ein Fahrzeug kann umfassen: eine vorab beschriebene Wischvorrichtung, einen Vorratsbehälter zur Aufnahme einer Reinigungsflüssigkeit, eine geregelte Pumpe zur Förderung der Reinigungsflüssigkeit, vorzugsweise eine Monopumpe, sowie mindestens eine Zuleitung zum Transport der Reinigungsflüssigkeit von der geregelten Pumpe zu einem Wegeventil der mindestens einen Wischvorrichtung, wobei die Zuleitung fluiddicht direkt mit der Einlassöffnung des Wegeventils verbunden sein kann oder, falls ein Anschlusselement mit dem Wegeventil verbunden ist, mit einem Anschlussstutzen des Anschlusselements verbunden sein kann.

Die Zuleitung kann einen Auslass einer geregelten Pumpe, insbesondere einer Monopumpe, fluiddicht mit dem Einlasskanal des Wegeventils in einer Wischvorrichtung verbinden, wobei zwischen der Zuleitung und dem Einlasskanal ein an die Stirnseite des Gehäuses des Wegeventils angeschlossenes Anschlusselement positioniert sein kann. Über Verzweigungen der Zuleitung sind in gleicher Weise auch Verbindungen zu den Einlasskanälen der Wegeventile mehrerer Wischvorrichtungen herstellbar. Vorzugsweise ist die Zuleitung flexibel ausgeführt. Dazu ist sie beispielsweise als flexible Schlauchverbindung ausgeführt. Es wurde eine Vielzahl von Materialien, die zur Herstellung der Schlauchverbindung in Frage kommen, erfolgreich getestet, insbesondere Kunststoffe.

Durch die Zuführung von unter einem umschaltbaren Druck stehender Reinigungsflüssigkeit zum Wegeventil (wobei die Drücke innerhalb der Druckbereiche *p*₃ und *p*₄ liegen - erster Druckbereich p₃ und zweiter Druckbereich p₄), können die Ventilköpfe zwischen ihren beiden Positionen verschoben werden, wodurch das Wegeventil in sehr einfacher Weise, ohne Zuhilfenahme externer Schalteinheiten, die z. B. elektrisch oder pneumatisch ausgeführt sein können, zwischen seinen Schaltstellungen umschalten kann. Damit ist es besonders kompakt herstellbar. Aufgrund der kompakten Bauweise des Wegeventils ist es ebenso möglich, das Wegeventil an einem im Wesentlichen beliebigen Ort entlang des Wischwasserschlauchs/der Wischwasserschläuche anzuordnen. Beispielsweise ist eine Anordnung kurz hinter der Wischwasserpumpe, eine Anordnung kurz vor dem Übergang auf den beweglichen Wischerarm, oder eine Anordnung in einem sonstigen geeigneten Bereich des Fahrzeugs, an oder in dem beispielsweise ein ausreichender Bauraum vorhanden ist, möglich.

In der nachfolgenden Beschreibung sind weitere Aspekte und Ausführungsbeispiele der vorliegenden Erfindung offenbart. Gleiche Bezugszeichen bezeichnen entsprechende ähnliche Teilen. Das Wegeventil ist in seiner Ausführung aber nicht auf die gezeigten spezifischen Ausführungsbeispiele beschränkt. Die verschiedenen Aspekte und Merkmale, die in den Ausführungsbeispielen offenbart sind, können durch einen Fachmann auf verschiedene Arten kombiniert werden, um einen oder mehrere Vorteile der vorliegenden Erfindung zu erzielen.

Kurze Beschreibung der Zeichnungen:
Fig. 1a zeigt eine schematische Schnittdarstellung eines Wegeventils, wenn der Druck p kleiner als der erste Schaltdruck p₁ ist, in einem ersten Schaltzustand.
Fig. 1b zeigt eine schematische Schnittdarstellung des Wegeventils von Fig. 1a, wenn der Druck p größer als der zweite Schaltdruck p₂, aber kleiner als der erste Schaltdruck p₁ ist, in einem zweiten Schaltzustand.
Fig. 1c zeigt eine schematische Schnittdarstellung des Wegeventils von Figs. 1a und 1b, wenn der Druck p größer als der zweite Schaltdruck p₂ und größer als der erste Schaltdruck p₁ ist, in einem dritten Schaltzustand.
Fig.2 zeigt eine schematische Schnittdarstellung eines Wegeventils mit integriertem Rückschlagventil.
Fig.3 zeigt eine schematische Schnittdarstellung eines Wegeventils mit zwei Einlasskanälen.
Fig. 4a zeigt eine aus dem Stand der Technik bekannte Wischvorrichtung für ein Kraftfahrzeug.
Fig. 4b zeigt ein Wischerblatt einer Wischvorrichtung, das mit zwei Düsenanordnungen (eine davon verdeckt) ausgestattet ist.
Fig. 4c zeigt in schematischer Darstellung ein Ausführungsbeispiel für eine Wischvorrichtung, ausgestattet mit einem in einem Wischerblattadapter positionierten, mit einem Anschlusselement verbundenen Wegeventil, das mit zwei Düsenanordnungen eines Wischerblatts verbunden ist.
Fig. 4d zeigt ein Ausführungsbeispiel für ein Wischsystem für ein Kraftfahrzeug, aufweisend zwei Wischvorrichtungen, die mit Wegeventilen gemäß vorliegendem Vorschlag ausgestattet werden können.

### Ausführungsbeispiele

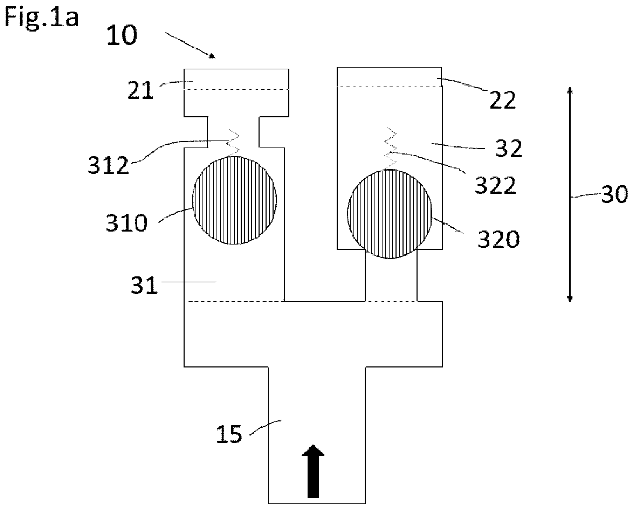

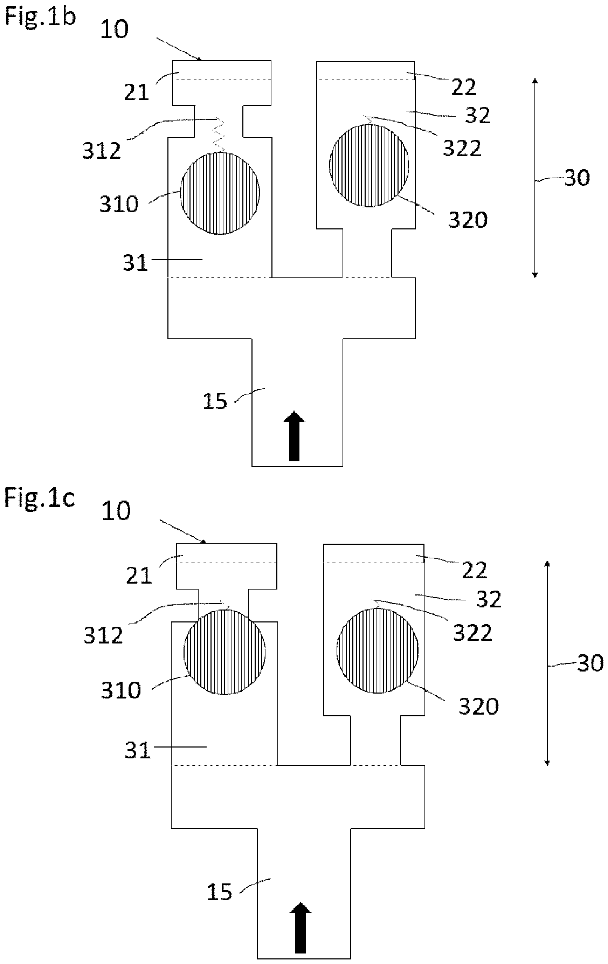

Fig. 1 zeigt dabei eine schematische Schnittdarstellung eines Wegeventils 10 bei unterschiedlichem Druck p.

Fig.1a zeigt dabei den ersten Schaltzustand. Hier ist der angelegte Druck p kleiner als der erste Schaltdruck p₁. Da der durch das anströmenden Fluid wirkende Druck p die Haltekraft des ersten Vorspannmittels 312 nicht übersteigt, ist der erste Ventilkopf 310 in einer Öffnungsposition und der erste Verbindungskanal 31 offen (kann also von einem Fluid durchströmt werden). Der zweite Ventilkopf 320 ist in einer Verschlussposition und der zweite Verbindungskanal 32 geschlossen.

Fig.1b zeigt dabei den zweiten Schaltzustand. Hierbei ist der Druck p größer als der zweite Schaltdruck p₂ aber kleiner als der erste Schaltdruck p₁. Das heißt, sowohl der erste Ventilkopf 310, als auch der zweite Ventilkopf 320 sind in einer Öffnungsposition. Dadurch sind sowohl der erste Verbindungskanal 31 als auch der zweite Verbindungskanal 32 offen.

Fig.1c zeigt dabei den dritten Schaltzustand. Hier ist der Druck p größer als der erste Schaltdruck p₁ und der zweite Schaltdruck p₂. Dadurch ist der erste Ventilkopf 310 in einer ersten Verschlussposition und der zweite Ventilkopf 320 ist in einer Öffnungsposition. Dadurch ist der erste Verbindungskanal 31 geschlossen und der zweite Verbindungskanal 32 offen.

Der eingezeichnete Pfeil zeigt dabei in allen Teilabbildungen Fig.1a, Fig.1b und Fig.1c die Richtung an, in welche ein Fluid strömt, welches das Wegeventil passiert.

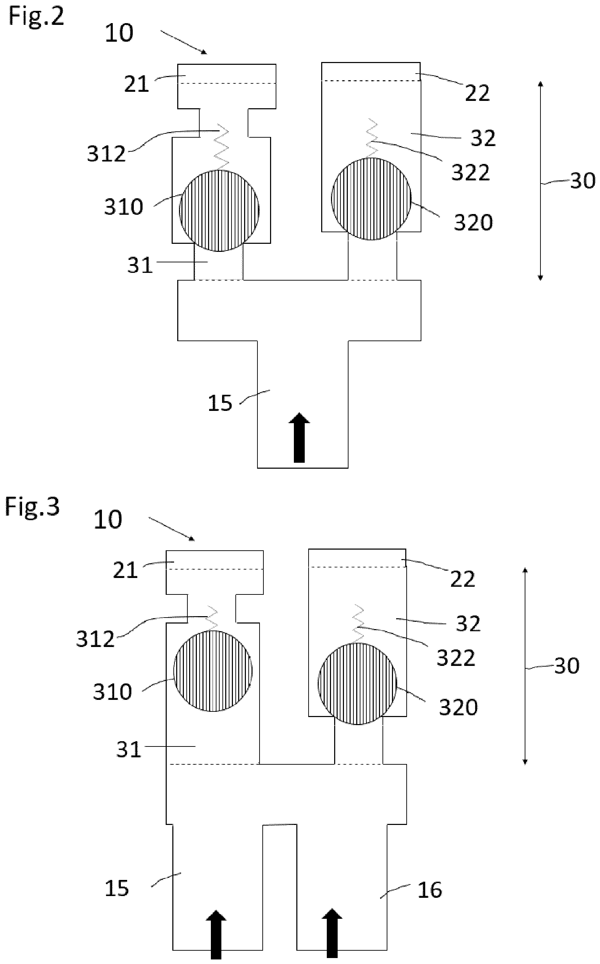

Fig.2 zeigt ein Wegeventil 10 mit integriertem Rückschlagventil. Vorliegend ist der Druck p nichtpositiv (p ≤ 0) gewählt. Dadurch befinden sich beide Ventilköpfe 310, 320 in einer Verschlussposition, wodurch der erste Verbindungskanal und der zweite Verbindungskanal geschlossen sind. Beide Ventilköpfe 310, 320 wirken jetzt als Rückströmungssicherung und verhindern so das Zurückfließen von Fluid in den Einlasskanal 15.

Fig.3 zeigt ein Wegeventil 10 mit zwei Einlasskanälen 15, 16. Diese sind hierbei fluiddurchströmbar miteinander verbunden. So kann Fluid von jedem Einlasskanal 15, 16 in die vorliegend zwei Verbindungskanäle 31, 32 strömen.

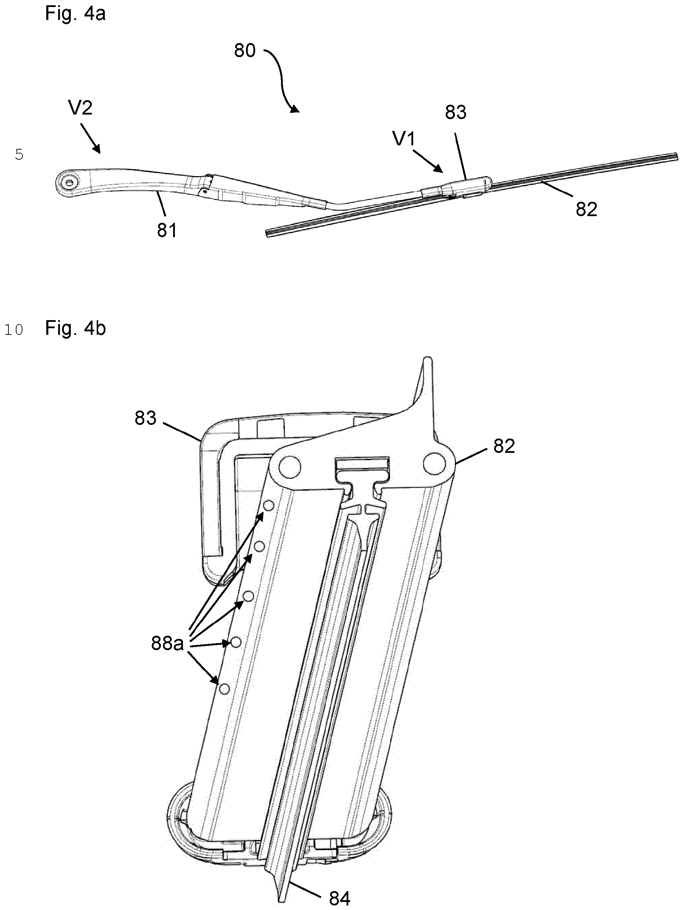

Fig. 4a zeigt eine bekannte Wischvorrichtung 80 für ein Kraftfahrzeug, aufweisend einen Wischerarm 81, ein Wischerblatt 82 sowie einen Wischerblattadapter 83, der den Wischerarm 81 und das Wischerblatt 82 verbindet. Ein Wegeventil 10 gemäß vorliegendem Vorschlag kann im Wischerblattadapter 83, bezeichnet durch die Position V1, oder im Wischerarm 81, bezeichnet durch die Position V2, untergebracht werden.

Fig. 4b zeigt in einer perspektivischen Darstellung ein Wischerblatt 82 einer Wischvorrichtung, das mit einem Wischgummi 84 ausgestattet ist. Das Wischerblatt 82 weist auf seinen beiden Längsseiten zwei Düsenanordnungen auf. Dargestellt ist nur die Hälfte einer ersten Düsenanordnung mit einer durch 5 Düsenausgänge erkennbaren Fluidleitung 88a.

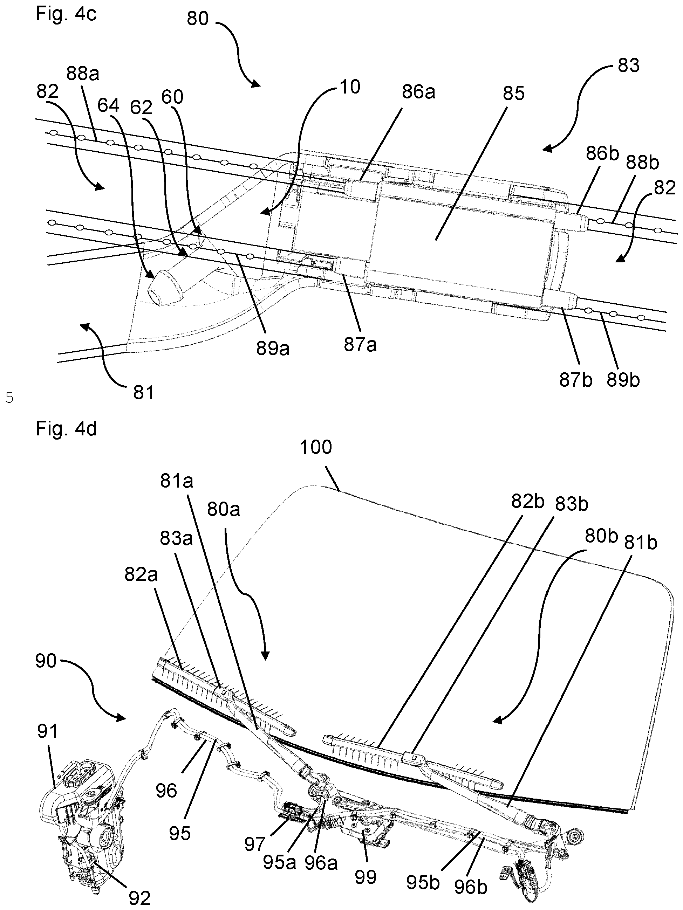

Fig. 4c zeigt eine Wischvorrichtung 80, bei der ein in einem Wischerblattadapter 83 positioniertes, mit einem Anschlusselement 60 verbundenes Wegeventil 10, mit zwei Düsenanordnungen eines Wischerblatts 82 verbunden ist. Eine optimale Anpassung an die Geometrie des Wischerblattadapters 83 und des Wischerarms 81 wird dadurch realisiert, dass der Zuführkanal 62 des Anschlusselements 60 gegen die Ebene, in welcher der Einlasskanal und die Auslasskanäle des Wegeventils 10 liegen, abgewinkelt ist. Am Anschlussstutzen 64 des Zuführkanals 62 ist eine nicht dargestellte Schlauchverbindung angebracht, die das Wegeventil 10 mit einer nicht dargestellten Monopumpe verbindet. Der Wischerblattadapter 83 weist eine Eindüsungsvorrichtung 85 auf, deren erste Auslässe 86a, 86b mit Fluidleitungen 88a, 88b der ersten Düsenanordnung und deren zweite Auslässe 87a, 87b mit Fluidleitungen 89a, 89b der zweiten Düsenanordnung verbunden sind. Die Fluidleitungen 88a, 88b, 89a, 89b weisen äquidistant angeordnete Düsenausgänge auf, die durch Ovale veranschaulicht sind. Das Wegeventil 10 stellt in seiner ersten Schaltstellung eine Fluidverbindung zur ersten Düsenanordnung mit den ersten Auslässen 86a, 86b und in seiner dritten Schaltstellung eine Fluidverbindung zur zweiten Düsenanordnung mit den zweiten Auslässen 87a, 87b her.

Fig. 4d zeigt ein Ausführungsbeispiel für ein Wischsystem 90 für eine Windschutzscheibe 100 eines Kraftfahrzeugs gemäß dem Stand der Technik, aufweisend zwei Wischvorrichtungen 80a, 80b, die mit vorliegend vorgeschlagenen Wegeventilen ausgestattet werden können (aber in Fig. 4d noch nicht damit ausgestattet sind). Die Wischvorrichtungen 80a, 80b weisen jeweils einen Wischerarm 81a, 81b, ein Wischerblatt 82a, 82b sowie einen Wischerblattadapter 83a, 83b auf. Zudem weist das Wischsystem 90 einen Reversiermotor 99 auf, welcher beide Wischerarme 81a, 81b in eine Hin-und-Her-Bewegung versetzen kann. Gemäß dem in Fig. 4d dargestellten Stand der Technik, also ohne Wegeventile, ist das Wischsystem 90 mit einer an einen Vorratsbehälter 91 für Reinigungsflüssigkeit angeschlossenen Dualpumpe 92 ausgestattet. Ein erster Auslass der Dualpumpe 92 ist mit einer ersten Zuleitung 95, ausgeführt als Schlauchleitung, verbunden, die sich in einer Connector Box 97 in die ebenfalls als Schlauchleitungen ausgeführten Abschnitte 95a, 95b verzweigt, welche zu den Drehachsen der Wischerarme 81a, 81b und von dort weiter durch die Wischerarme 81a, 81b zu den Wischerblattadaptern 83a, 83b geführt werden. Dort versorgen sie, wenn sich die Wischerarme 81a, 81b nach oben bewegen, jeweils eine erste, nach oben gerichtete Düsenanordnung in den Wischerblättern 82a, 82b mit Reinigungsflüssigkeit, sodass Reinigungsflüssigkeit vor den sich nach oben bewegenden Wischerblättern 82a, 82b auf die zu reinigende Oberfläche gesprüht wird. Wenn die Wischerarme 81a, 81b ihre Bewegungsrichtung ändern und sich nach unten bewegen, ist jeweils eine zweite Düsenanordnung auf der gegenüberliegenden Längsseite der Wischerblätter mit Reinigungsflüssigkeit zu versorgen, sodass Reinigungsflüssigkeit nun vor den sich nach unten bewegenden Wischerblättern 82a, 82b auf die zu reinigende Oberfläche gesprüht wird. Gemäß dem Stand der Technik ist dazu eine mit einem zweiten Auslass der Dualpumpe 92 verbundene zweite Zuleitung 96, ausgeführt als Schlauchleitung, vorhanden, die sich in der Connector Box 97 in die ebenfalls als Schlauchleitungen ausgeführten Abschnitte 96a, 96b verzweigt, welche zur Drehachse der Wischerarme und von dort weiter durch die Wischerarme 81a, 81b zu den Wischerblattadaptern 83a, 83b geführt werden. Dort versorgen sie, wenn sich die Wischerarme 81a, 81b nach unten bewegen, jeweils eine zweite, nach unten gerichtete Düsenanordnung mit Reinigungsflüssigkeit, sodass Reinigungsflüssigkeit vor den sich nach unten bewegenden Wischerblättern 82a, 82b auf die zu reinigende Oberfläche gesprüht wird. Dieser Aufbau kann wesentlich einfacher und kostengünstiger gestaltet werden, indem Wegeventile gemäß vorliegendem Vorschlag in die Wischerblattadapter 83a, 83b eingebaut werden. Bei einer solchen Ausstattung mit Wegeventilen kann auf eine der beiden Zuleitungen 95 oder 96 mit ihren Abschnitten 95a, 95b oder 96a, 96b verzichtet werden. Beispielsweise kann auf die von einem zweiten Auslass der Dualpumpe ausgehende komplette zweite Zuleitung 96 mit den zu den Wischerblattadaptern 83a, 83b führenden Abschnitten 96a, 96b verzichtet werden. Somit ist auch der zweite Auslass der Dualpumpe 92 nicht mehr belegt und damit verzichtbar. Die Dualpumpe 92 mit zwei Auslässen kann somit durch eine kostengünstige Monopumpe mit nur einem Auslass ersetzt werden. Gemäß dem in Fig. 4d dargestellten Stand der Technik werden ausgehend von der Dualpumpe 92 zwei Schläuche, die sich in der Connector Box 97 verzweigen, über die gesamte Strecke bis zu den Wischerblattadaptern 83a, 83b geführt. Es handelt sich somit um ein aufwendiges Zweischlauchsystem. Bei Einsatz der Wegeventile in den Wischerblattadaptern 83a, 83b genügt ein von einer Monopumpe ausgehendes Einschlauchsystem, aufweisend zum Beispiel die Zuleitung 95 mit den Verzweigungen 95a, 95b, die zu den Wischerblattadaptern führen. Somit wird eine erhebliche Gewichts-, Volumen-, Material- und damit Kosteneinsparung erzielt. Um die Wirkungsweise des Wischsystems 90 zu veranschaulichen, sind in Fig. 4d beide Düsenanordnungen beider Wischvorrichtungen 80a, 80b in Betrieb, d. h. Reinigungsflüssigkeit sprühend, gezeigt (visualisiert durch von beiden Seiten der Wischerblätter 82a, 82b ausgehende kurze parallele Striche). Im praktischen Betrieb bewirken die Wegeventile hingegen, dass bei jedem Wischerblatt 82a, 82b stets nur eine der beiden Düsenanordnungen bedarfsgerecht in Betrieb gesetzt wird, nämlich die in die momentane Bewegungsrichtung des Wischerblatts 82a, 82b sprühende Düsenanordnung.

## Patentansprüche

1. Wegeventil (10) aufweisend
• zumindest einen Einlasskanal (15)
• einen ersten Auslasskanal (21)
• einen zweiten Auslasskanal (22)
• ein Steuerelement (30) zum Steuern eines Fluidstromes zwischen dem zumindest einen Einlasskanal (15), dem ersten Auslasskanal (21) und/oder dem zweiten Auslasskanal (22) umfassend
o einen fluiddurchströmbar mit dem zumindest einen Einlasskanal und mit dem ersten Auslasskanal (21) verbundenen ersten Verbindungskanal (31)
o einen ersten Ventilkopf (310) mit einem ersten Vorspannmittel (312), welcher innerhalb des ersten Verbindungskanals (31) zwischen einer Öffnungsposition stromaufwärts und einer ersten Verschlussposition stromabwärts verschiebbar derart angeordnet ist, dass wenn der am ersten Zylinderkopf (310) wirkende Druck eines durch den ersten Verbindungskanal (31) fließenden Fluids größer als ein erster Schaltdruck (p₁) ist und somit die Haltekraft des Vorspannmittels (312) übersteigt, der erste Ventilkopf (310) von der Öffnungsposition zu seiner ersten Verschlussposition stromabwärts verschoben wird
o einen fluiddurchströmbar mit dem zumindest einen Einlasskanal (15) und mit dem zweiten Auslasskanal (22) verbundenen zweiten Verbindungskanal (32)
o einen zweiten Ventilkopf (320) mit einem zweiten Vorspannmittel (322), welcher innerhalb des zweiten Verbindungskanals (32) zwischen einer Verschlussposition stromaufwärts und einer Öffnungsposition stromabwärts verschiebbar derart angeordnet ist, dass wenn der am zweiten Zylinderkopf (320) wirkende Druck eines durch den zweiten Verbindungskanal (32) fließenden Fluids größer als ein zweiter Schaltdruck (p₂) ist und somit die Haltekraft des Vorspannmittels (322) übersteigt, der zweite Ventilkopf (320) von seiner Verschlussposition zu seiner Öffnungsposition stromabwärts verschoben wird
**dadurch gekennzeichnet, dass**
der erste Verbindungskanal (31) so ausgebildet ist, dass er bei einer Bewegung des ersten Ventilkopfs (310) von seiner Öffnungsposition zu seiner Verschlussposition geschlossen wird, wobei der zweite Verbindungskanal (32) so ausgebildet ist, dass er durch eine Bewegung des zweiten Ventilkopfs (32) von seiner Verschlussposition zu seiner Öffnungsposition geöffnet wird.

2. Wegeventil (10) gemäß Anspruch 1, **dadurch gekennzeichnet dass** der erste Ventilkopf (310) weiterhin innerhalb des ersten Verbindungskanals (31) zwischen einer zweiten Verschlussposition und seiner Öffnungsposition stromaufwärts derart verschiebbar angeordnet ist, sodass, wenn der Druck eines durch den ersten Verbindungskanal (31) fließenden Fluids positiv ist, er von der zweiten Verschlussposition zu seiner Öffnungsposition stromabwärts verschoben wird, wobei der erste Verbindungskanal (31) so ausgebildet ist, dass er bei einer Bewegung des ersten Ventilkopfs (310) von der zweiten Verschlussposition zu seiner Öffnungsposition geöffnet wird, sodass das Wegeventil (10) als Rückschlagventil wirken kann.

3. Wegeventil (10), gemäß Anspruch 1 oder 2 **dadurch gekennzeichnet, dass** es in einem Gehäuse angeordnet ist, welches so ausgebildet ist, dass es zumindest abschnittsweise den zumindest einen Einlasskanal (15), die Verbindungskanäle (31, 32) und zumindest abschnittsweise die Auslasskanäle (21, 22) umgibt.

4. Wegeventil (10), gemäß einem der Ansprüche 1 bis 3 **dadurch gekennzeichnet, dass** das Wegeventil (10) genau zwei Auslasskanäle (21, 22) umfasst.

5. Wegeventil (10), gemäß einem der Ansprüche 1 bis 4 **dadurch gekennzeichnet, dass** das Wegeventil (10) genau zwei Einlasskanäle (15, 16) aufweist, wobei diese fluiddurchströmbar miteinander verbunden sind.

6. Wegeventil (10), gemäß einem der Ansprüche 1 bis 5 **dadurch gekennzeichnet, dass** der erste Ventilkopf (310) mit dem ersten Vorspannmittel (312) und der zweite Ventilkopf (320) mit dem zweiten Vorspannmittel (322) so ausgebildet sind, dass der erste Schaltdruck (p₁) größer ist als der zweite Schaltdruck (p₂), dass der erste Schaltdruck (p₁) gleich dem zweiten Schaltdruck (p₂) ist oder dass der erste Schaltdruck (p₁) kleiner als der zweite Schaltdruck (p₂) ist.

7. Wegeventil (10), gemäß einem der Ansprüche 1 bis 6, **dadurch gekennzeichnet, dass** wenigstens ein Vorspannmittel als mechanisches und/oder als magnetisches Rückstellelement ausgebildet ist.

8. Wischvorrichtung (80) für ein Fahrzeug, aufweisend einen Wischerarm (81) und zumindest eine erste und eine zweite Düse, vorzugsweise eine Mehrzahl von ersten und/oder zweiten Düsen, welche in Richtung zweier gegenüberliegender Längsseiten des Wischerarms (81) gerichtet sind, **gekennzeichnet durch** ein Wegeventil (10) nach einem der Ansprüche 1 bis 7, wobei der erste Auslasskanal (21) des Wegeventils (10) mit der ersten Düse und der zweite Auslasskanal (22) des Wegeventils (10) mit der zweiten Düse fluidisch verbunden ist.

9. Wischsystem (90) für ein Fahrzeug, aufweisend mindestens eine Wischvorrichtung (80) nach Anspruch 8 eine insbesondere als Monopumpe ausgebildete geregelte Pumpe (92) zur Förderung einer Flüssigkeit mit zumindest einem ersten Druckbereich (*p*₃) und einem zweiten Druckbereich (*p*₄).

10. Wischsystem (90) für ein Fahrzeug nach Anspruch 8 oder 9, insbesonder gemäß Anspruch 9, **dadurch gekennzeichnet, dass** es weiterhin eine Zuleitung (95, 95a, 95b, 95c, 95d), insbesondere zumindest abschnittsweise genau eine Zuleitung (95, 95a, 95b, 95c, 95d) und/oder zumindest abschnittweise genau eine Zuleitung (95, 95a, 95b, 95c, 95d) pro Wischerarm (81) zum Transport der Flüssigkeit von einer geregelten Pumpe (92) zu dem Wegeventil (10) der mindestens einen Wischvorrichtung (80) aufweist.

11. Wischsystem (90) für ein Fahrzeug, gemäß Anspruch 9 oder 10, **dadurch gekennzeichnet, dass** es einen Bewegungsmotor, insbesondere einen Reversiermotor, zur Bewegung des Wischerarms (81) aufweist.
